Europäisches Patentamt

European Patent Office

Office européen des brevets

(11) Publication number: **0 233 054**
**A2**

## (12) EUROPEAN PATENT APPLICATION

(21) Application number: **87301000.3**

(22) Date of filing: **04.02.87**

(51) Int. Cl.⁴: **G 01 L 9/00**
**G 01 L 9/06**

(30) Priority: **07.02.86 JP 25392/86**

(43) Date of publication of application:
**19.08.87 Bulletin 87/34**

(84) Designated Contracting States: **CH DE FR GB LI**

(71) Applicant: **SEIKO INSTRUMENTS & ELECTRONICS LTD.**
**31-1, Kameido 6-chome**
**Koto-ku Tokyo 136 (JP)**

(72) Inventor: **Hojyo, Hisao Seiko Instruments**
**Electronics Ltd. 31-1, Kameido 6-chome**
**Koto-ku Tokyo (JP)**

(74) Representative: **Caro, William Egerton et al**
**J. MILLER & CO. Lincoln House 296-302 High Holborn**
**London WC1V 7JH (GB)**

(54) Gas pressure gauge.

(57) A pressure gauge comprises a phase locked loop circuit (11) including a quartz crystal vibrator (5) connected to a frequency variable oscillator (1), a display converter circuit (12) connected to the phase locked loop circuit and a display unit (13) connected to the display converter circuit. The quartz crystal vibrator is of the tuning fork type obtained from a Z-plate which is cut at an angle of +1°50′ or greater with respect to the Y-axis.

FIG.1

Bundesdruckerei Berlin

**Description**

## GAS PRESSURE GAUGE

This invention relates to gas pressure gauges which measure pressures of gases by means of quartz crystal vibrators.

It has been found that the resonance resistance of a quartz crystal vibrator depends upon pressure over a wide range and so gas pressure gauges have been developed in which a single sensor measures pressures in the range from atmospheric pressure to $10^{-3}$ Torr by utilising this phenomenon. Such gas pressure gauges are disclosed in, for example, "Keiso" (Development of a very small Vacuum Sensor using a Quartz Vibrator), Vol. 27, No. 7, 1984.

In a conventional gas pressure gauge of this type which utilises the resonance resistance of a quart crystal vibrator, the resonance resistance changes markedly in the low pressure region of $10^{-3}$ to about $10^{-2}$ Torr, making it difficult to effect precise measurements.

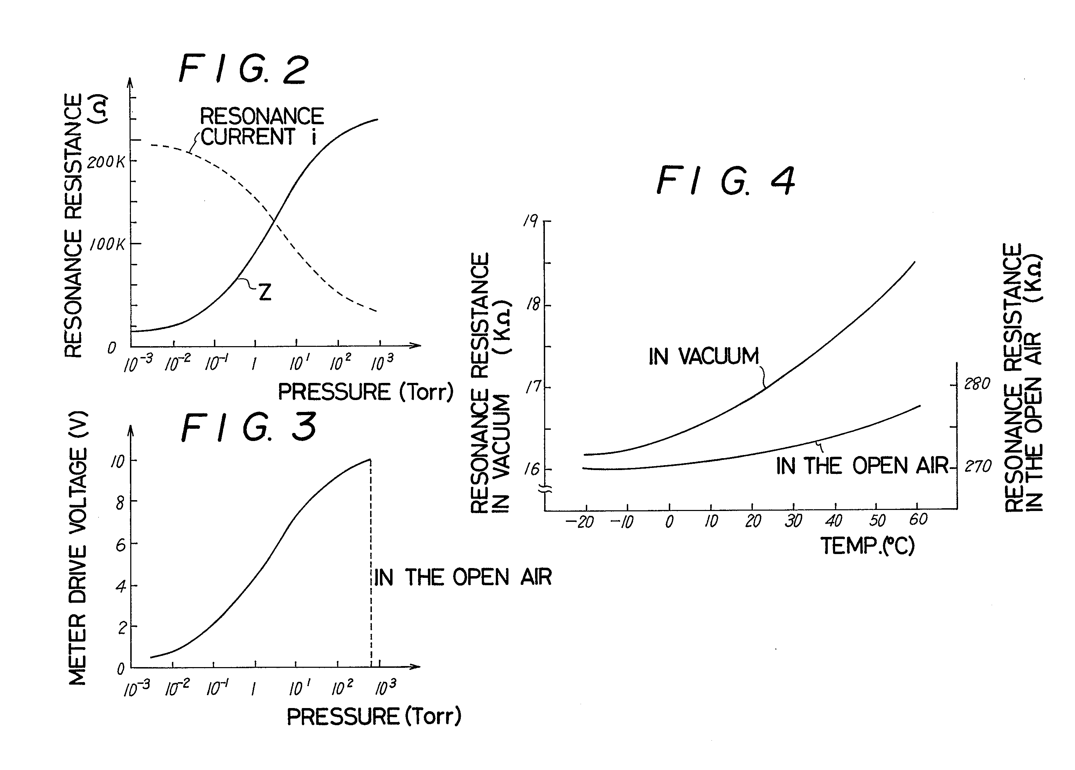

Figure 4 illustrates the temperature characteristics of resonance resistance of a conventional quartz crystal vibrator. In vacuum, the resonance resistance greatly changes with the change in temperature, i.e. the resonance resistance increases with increase in temperature. In the open or ambient air, on the other hand, the resonance resistance is mostly affected by friction with the air, and does not greatly change even when the temperature is changed. Accordingly, in a conventional gas pressure gauge the resonance resistance is seriously affected by temperature as the gas pressure decreases, and errors in measurement develop.

The invention seeks to provide a gas pressure gauge having a quartz crystal vibrator whose resonance resistance varies relatively little with temperature under low pressure conditions.

According to the present invention there is provided a gas pressure gauge comprising: a phase locked loop circuit including a quartz crystal vibrator connected to a frequency variable oscillator; a display converter connected to said phase locked loop circuit; and a display unit connected to said display converter circuit, characterised in that said quartz crystal vibrator is of the tuning fork type obtained from a Z-plate which is cut at an angle of $+1°50'$ or greater with respect to the Y-axis.

The phase locked loop circuit, in the preferred embodiment includes a phase comparator, a low pass filter and an amplifier.

Preferably the quartz crystal vibrator is cut from a flat plate but is defined by the X-axis and by a Y'-axis which is obtained by rotating the Y-axis in the counterclockwise direction by an angle of $1°50'$ or greater with the X-axis as an axis of rotation.

The quartz crystal vibrator may be cut at an angle of between $1°50'$ and $2°50'$.

The invention is illustrated, merely by way of example, in the accompanying drawings, in which:-

Figure 1 is a block diagram of a gas pressure gauge according to the present invention;

Figure 2 illustrates the relationship between gas pressure, resonance resistance and resonance current of a quartz crystal vibrator of a gas pressure gauge according to the present invention;

Figure 3 is a diagram illustrating the relationship between meter drive voltage and gas pressure characteristics of a gas pressure gauge according to the present invention;

Figure 4 illustrates the temperature characteristics of resonance resistance of a conventional quartz crystal vibrator;

Figure 5 is a perspective view of a tuning fork type quartz crystal vibrator of the gas pressure gauge of Figure 1; and

Figure 6 is a diagram illustrating the relationship between resonance resistance and temperature characteristics of tuning fork type quartz crystal vibrators and cutting angles.

The present invention is concerned with a gas pressure gauge which utilises the fact that a quartz crystal vibrator has a resonance frequency which changes with pressure when the quartz crystal vibrator is stably vibrated at its resonance frequency in a phase locked loop circuit (hereinafter referred to as a "PLL circuit"), the quartz crystal vibrator being of the tuning fork type obtained from a Z-plate of quartz crystal material cut at an angle of greater than $1°50'$ with respect to the Y-axis.

The quartz crystal vibrator of the tuning fork type obtained from a Z-plate of quartz crystal material cut at an angle of greater than $1°50'$ with respect to the Y-axis, exhibits parabolic temperature-resonance resistance characteristics, the peak thereof lying close to room temperature at which the gas pressure gauge is used and the parabola opening broadly. Therefore, the temperature-resonance resistance characteristics are nearly flat in the temperature regions where the gas pressure gauge is to be used, and are not significantly effected by change in ambient temperature.

Figure 2 is a diagram illustrating the relationship between gas pressure, resonance resistance and resonance current of a quartz crystal vibrator of a gas pressure gauge according to the present invention. The quartz crystal vibrator exhibits resonance resistance from atmospheric pressure from $10^{-3}$ Torr. If this quartz crystal vibrator is driven at a constant voltage, there is obtained a resonance current/gas pressure curve that is represented by $i$ in Figure 2. Like the above-mentioned resonance resistance, the resonance current exhibits sensitivity to gas pressure from atmospheric pressure to $10^{-3}$ Torr. From the standpoint of easily taking measurement, therefore, it is better to measure resonance current or resonance voltage than to measure the resonance resistance.

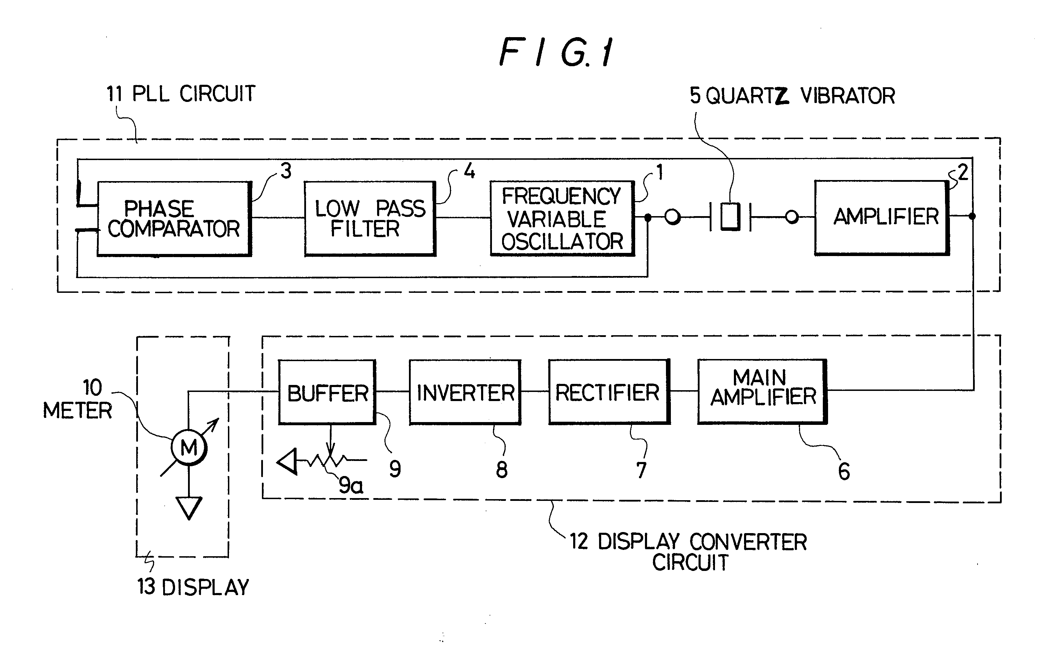

Figure 1 is a block diagram of a circuit of a gas pressure gauge according to the present invention. The gas pressure gauge consists of a PLL circuit 11, a display converter circuit 12, and a display unit 13. The PLL circuit 11 consists of a frequency variable oscillator 1 which is controlled by an input current or voltage, an amplifier 2 which amplifies the resonance current of a quartz crystal vibrator 5 as a voltage, a phase comparator 3 which compares the phase of an output signal of the amplifier 2 with the phase of an output signal of the frequency variable oscillator 1, and a low pass filter 4 which converts pulse-like output signals of the phase comparator 3 into a DC voltage. The output voltage of the low pass filter 4 controls the oscillation frequency of the frequency variable oscillator 1. The quartz crystal vibrator 5, which is a pressure sensor, is connected between the frequency variable oscillator 1 and the amplifier 2.

The principle of operation of the PLL circuit 11 is well known and so will not be described here. The oscillation frequency of the frequency variable oscillator 1 is controlled at all times so that the phase difference becomes zero between the output signal of the frequency variable oscillator 1, i.e. the drive voltage of the quartz crystal vibrator 5 and the output signal of the amplifier 2, i.e. the current that flows through the quartz crystal vibrator 5. That is, the quartz crystal vibrator 5 is driven at its own resonance frequency at all times, this being significant from the standpoint of commercialisation of gas pressure gauges. This is because the resonance frequency of the quartz crystal vibrator is subject to change depending upon the pressure of the ambient gas.

The display converter circuit 11 consists of a main amplifier 6 which further amplifies the signal from the amplifier 2, a rectifier 7 which rectifies the output signal of the main amplifier 6 into a direct current, an inverter 8 which inverts the polarity of the DC voltage output of the rectifier 7 and a buffer 9 which applies a bias to the output voltage of the inverter 8. The amount of bias can be arbitrarily changed by a variable resistor 9a.

A display unit 13 displays gas pressure in digital or analog form and is composed of a meter 10 so that gas pressure can be read from the deflection of a needle (not shown) of the meter.

The pressure characteristics of resonance current of the quartz crystal vibrator are shown in Figure 2: i.e. the resonance current increases with the decrease in the pressure of ambient gas. Therefore, if the resonance current is amplified as a voltage and is rectified into a direct current to drive the meter 10, the deflection of the needle of the meter 10 increases with the decrease in pressure so that the indication of the needle is contrary to common sense. A meter drive voltage shown in Figure 3 can be obtained by inverting the polarity of the DC voltage output by the inverter 8 and by applying a bias voltage by the buffer 9. In the example of Figure 3, the amount of bias is so adjusted that the meter drive voltage will be 10 volts at atmospheric pressure. Thus, an ordinary pressure indication can be obtained in which the needle of the meter 10 is fully deflected under atmospheric pressure, and the deflection of the needle of the meter decreases with decrease in pressure.

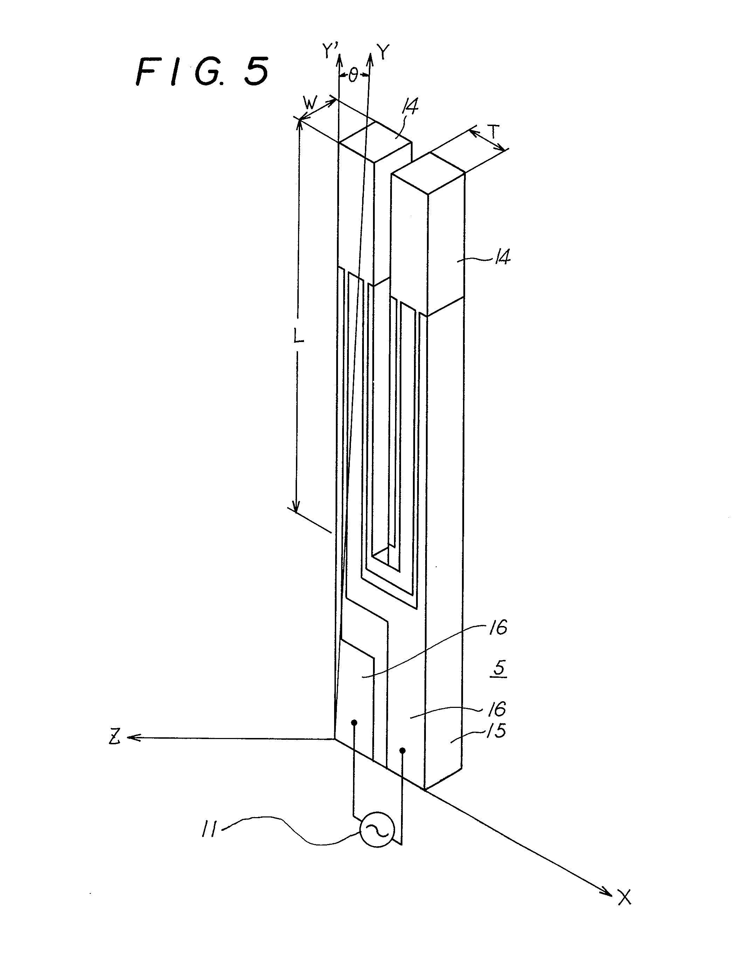

Figure 5 is a perspective view of the quartz crystal vibrator 5. The quartz crystal vibrator 5 is of the tuning fork type which consists of two arms 14 and a leg 15 which supports them. On the surface are arranged a pair of electrodes (Au/Cr double-layer structure) 16. The PLL circuit 11 is connected across the electrodes. The arms of the tuning fork may have a length L of 10 mm, a width T of 3.25 mm and a thickness W of 130 microns. The sizes, however, are not to be limited to these values only.

What is important is a cutting angle as will be described below. That is, in Figure 5, the Z-axis is an optical axis that passes through a vertex of the quartz crystal material. The X-axis exists on a plane perpendicular to the Z-axis, and extends towards a vertex of the hexagonal pole of the quartz crystal material. Therefore, there are three X-axes that are separated by 120°. The Y-axis is on a plane perpendicular to the Z-axis, and intersects the X-axis at right angles.

The angle of cutting the tuning fork type quartz crystal vibrator (i.e. the azimuth of cutting the quartz crystal material) used in the present invention is as shown in Figure 5. Namely, the tuning fork is cut from a flat plate (i.e. Z-plane) that is defined by the X-axis and by a Y′-axis which is obtained by rotating the Y-axis in the counterclockwise direction by $\theta$ with the X-axis as an axis of rotation.

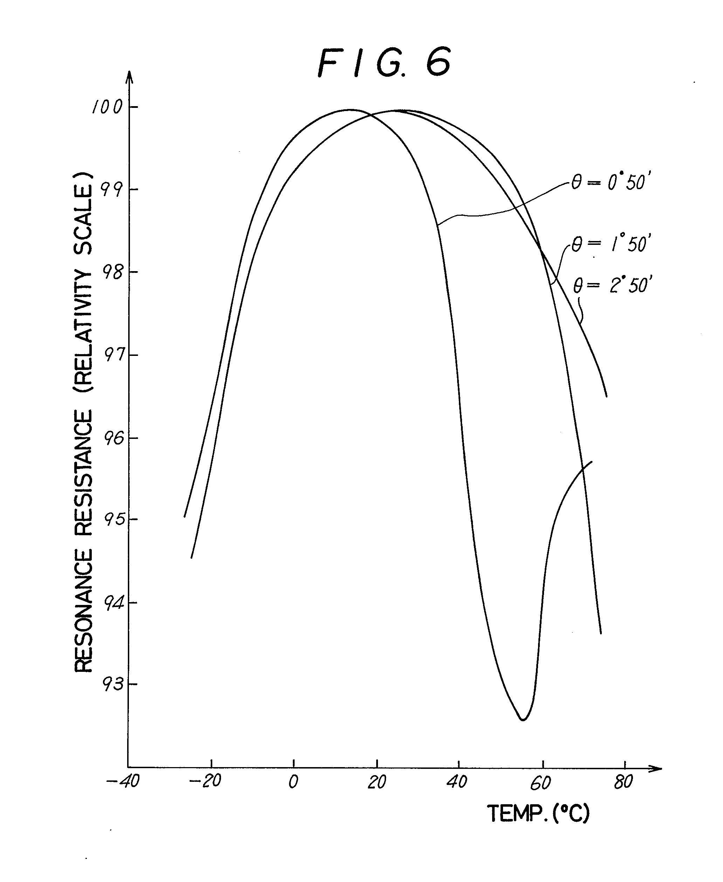

Figure 6 illustrates temperature/resonance resistance characteristics of tuning fork type quartz crystal vibrators that are cut at different angles $\theta$ under low pressure conditions. The resonance resistance (ordinate) is on a relative scale with the peak value set at 100. When the cutting angle is $\theta = 0°50'$, a peak value of the parabola is exhibited at 15°C, the parabola opening to a small extent. Therefore, flat characteristics are not exhibited near room temperature (25°C) which lies in a range where the gas pressure gauge is used. As the cutting angle is increased to $\theta = 1°50'$ and $\theta = 2°50'$, the peak value shifts to near 30°C which approaches room temperature. Further, the parabola opens wider, and resonance resistance characteristics become flat near room temperature. In this respect, there is no difference between the case of $\theta = 1°50'$ and the case of $\theta = 2°50'$. Therefore, if use is made of the tuning fork type quartz crystal vibrator which is cut at an angle of greater than $\theta = 1°50'$, there is obtained a gas pressure gauge whose resonance resistance varies little with temperature under low pressure conditions.

The gas pressure gauge utilises the resonance resistance of a tuning fork type quartz crystal vibrator that is cut at an angle of $+1°50'$ or greater, the resonance resistance changing in dependence upon pressure of the ambient gas. Thus the resonance resistance varies little with temperature under low pressure conditions, making it possible to obtain precise measurement at low pressure conditions.

## Claims

1. A gas pressure gauge comprising: a phase locked loop circuit (11) including a quartz crystal vibrator (5) connected to a frequency variable oscillator (1); a display converter (12) connected to said phase locked loop circuit; and a display unit (13) connected to said display converter circuit, characterised in that said quartz crystal vibrator is of the tuning fork type obtained from a Z-plate which is cut at an angle of +1°50′ or greater with respect to the Y-axis.

2. A gas pressure gauge as claimed in claim 1 characterised in that the phase locked loop circuit includes a phase comparator (3), a low pass filter (4) and an amplifier (2).

3. A gas pressure gauge as claimed in claim 1 characterised in that the quartz crystal vibrator is cut from a flat plate but is defined by the X-axis and by a Y′-axis which is obtained by rotating the Y-axis in the counterclockwise direction by an angle of 1°50′ or greater with the X-axis as an axis of rotation.

4. A gas pressure gauge as claimed in any preceding claim characterised in that the quartz crystal vibrator is cut at an angle of between 1°50′ and 2°50′.

5. In a quartz-type gas pressure gauge comprising: a phase locked loop circuit which consists of at least a frequency variable oscillator, a phase comparator, a low pass filter and an amplifier; a quartz vibrator connected to said frequency variable oscillator; a display converter circuit connected to said phase locked loop circuit; and a display unit connected to said display converter circuit; wherein the pressure of a gas surrounding said quartz vibrator is measured relying upon a resonance resistance of said quartz vibrator, or a resonance current of said quartz vibrator or a resonance voltage of said quartz vibrator, and wherein said quartz vibrator is of the type of a tuning fork obtained from a Z-plate which is cut at an angle of +1°50′ or larger with respect to the Y-axis.

# F I G.1

11 PLL CIRCUIT

5 QUARTZ VIBRATOR

| PHASE COMPARATOR (3) | → | LOW PASS FILTER (4) | → | FREQUENCY VARIABLE OSCILLATOR (1) | → | AMPLIFIER (2) |

10 METER

13 DISPLAY

| BUFFER (9) | → | INVERTER (8) | → | RECTIFIER (7) | → | MAIN AMPLIFIER (6) |

9a

12 DISPLAY CONVERTER CIRCUIT

0233054

**F I G. 4**

RESONANCE RESISTANCE IN THE OPEN AIR (kΩ)

280

270

RESONANCE RESISTANCE IN VACUUM (kΩ)

19
18
17
16

IN VACUUM

IN THE OPEN AIR

TEMP.(°C): −20  −10  0  10  20  30  40  50  60

**F I G. 2**

RESONANCE RESISTANCE (Ω)

200k
100k
0

RESONANCE CURRENT i

Z

PRESSURE (Torr): $10^{-3}$  $10^{-2}$  $10^{-1}$  1  $10^{1}$  $10^{2}$  $10^{3}$

**F I G. 3**

METER DRIVE VOLTAGE (V)

10
8
6
4
2

IN THE OPEN AIR

PRESSURE (Torr): $10^{-3}$  $10^{-2}$  $10^{-1}$  1  $10^{1}$  $10^{2}$  $10^{3}$

FIG. 5

# F I G. 6

RESONANCE RESISTANCE (RELATIVITY SCALE)

$\theta = 0°50'$

$\theta = 1°50'$

$\theta = 2°50'$

TEMP. (°C)